# EUROPEAN PATENT APPLICATION

(11) **EP 4 206 481 A1**
(43) Date of publication of application: **05.07.2023**
(21) Application number: 21383238.9
(22) Date of filing: 30.12.2021
(51) Int. Cl.: F16B 37/00, F16B 37/04, H02G 3/00

(54) **SUPPORT ASSEMBLY FOR CABLE TRAYS, AND COMPOSITE NUT FOR THE SUPPORT ASSEMBLY**

(71) Applicant: Unex Aparellaje Electrico S.L., 08005 Barcelona (ES)
(72) Inventor: MOSTAZO OVIEDO, José Antonio, 08903 L'Hospitalet de Llobregat (Barcelona) (ES)
(74) Representative: Curell Suñol S.L.P.

(57) **Abstract**

The present invention relates to a support assembly (1) for cable trays, comprising a bar (2) in the form of a rail, a support body (10), and at least one composite nut (14) comprising a rigid nut (15) and a support part (17). The composite nut (14) is coupled to the bar (2) for fixing the support body (10) by means of a fixing rod. The support body (10) has a coupling side (11) comprising at least one fitting area (21) having a shape complementary to the shape of the support part (17). The support part (17) fits with the fitting area (21) such that when the support body (10) is translated in the longitudinal direction of the bar (2) in either of the two ways of said longitudinal direction, said support body (10) integrally drives the composite nut (14).

## Description

### Field of the Invention

The invention is comprised in the field of cable carrying devices which are used for guiding electric cables, fiber-optic cables, or cables of another type. The invention relates particularly to a support assembly for cable trays, comprising at least one hollow profile-type bar in the form of a rail, a support body such as, for example and in a non-limiting manner, a bracket for supporting a cable tray, and one or more composite nuts which are coupled to the bar for fixing the support body to the bar.

More specifically, the invention relates to a support assembly for cable trays, of the type comprising:
- a bar formed by a hollow profile in the form of a rail, comprising a base wall, two side walls facing one another, and an open wall which demarcate with one another an empty inner space of said bar, said open wall facing said base wall and comprising a continuous opening extending all along the length of said bar, such that the free ends of said side walls form an outer surface of said open wall in one and the same plane on both sides of said continuous opening, and said side walls form two facing flanges;
- a support body comprising a coupling side for coupling said support body to said open wall of the bar, said coupling side comprising a resting surface resting against said outer surface of the open wall of the bar and at least one through hole for the passage of a fixing rod for fixing said support body to said bar;
- and at least one composite nut which is coupled to said bar, for the detachable fixing of said support body to said bar by means of the fixing rod, said composite nut comprising:
   - a rigid nut comprising a hole for receiving the fixing rod and having a width, in a plane perpendicular to the axis of said hole, that is smaller in a first direction than in a second direction perpendicular to said first direction, said rigid nut being sized such that when it is arranged with the first direction orthogonal to the longitudinal direction of said bar, it can pass through said continuous opening for being housed in said empty inner space below said flanges, and when it is arranged with the second direction orthogonal to the longitudinal direction of said bar, it is
   housed in said empty inner space below said flanges and interferes with said flanges such that it cannot pass through said continuous opening;
- and a support part supporting said rigid nut and comprising a frame and a central portion which is attached to said frame and in which said rigid nut is housed, said central portion comprising a through opening aligned with said hole of the rigid nut for the passage of the fixing rod; and said support part being formed such that when being subjected to a pushing force, it undergoes an elastic deformation which moves said rigid nut away from said frame.

The invention also relates to a composite nut for forming the support assembly.

### State of the Art

Composite nuts of the type referred to in the invention have the particularity that they can be placed inside a hollow profile-type bar in the form of a rail without the need to use other securing means, such that they are kept in place in the profile by themselves before placing a fixing screw. To that end, the user must place the composite nut in the bar, with the frame resting on the bar and the rigid nut oriented with its largest width parallel to the bar, sink the central portion which elastically deforms so that the rigid nut enters the rail and stays below the flanges of said rail, and finally rotate the entire composite nut or the rigid nut 90°. In this final position, the rigid nut is retained below the flanges of the rail and resting against same by the return force due to the elastic deformation of the central portion. Documents ES1260154U, EP0702160A2, CN203770351 U, and US9194418B2 disclose composite nuts of this type.

In the particular case of structures for guiding cables, the installation is often performed in hard-to-access places, with space restrictions and possibly at a raised height. It is therefore important for the installation operations to be performed with the greatest ease possible. One of the difficulties that arises in the use of known composite nuts for fixing a support body to the bar consists of it being necessary to adjust the position of each composite nut along said bar in order to adjust the position of the support body along the bar. This adjustment can be done before having assembled the support body on the bar, manually adjusting each of the composite nuts separately by means of a trial and error method, or else with the body of the support pre-assembled on the bar and the fixing screws partially threaded into the composite nuts, whereby the composite nuts move with the support body when they are driven by the fixing screws.

### Description of the Invention

The purpose of the invention is to provide a support assembly for cable trays of the type indicated above, which allows the user to more easily install the support body and the composite nuts in a desired position along the bar.

This purpose is achieved by means of a support assembly for cable trays of the type indicated above, characterized in that the coupling side of the support body comprises at least one fitting area having a shape complementary to the shape of the support part, such that in an assembled position of the support assembly, in which the rigid nut is arranged with the second direction orthogonal to the longitudinal direction of the bar and is housed in the empty inner space below the flanges, said frame is resting on the outer surface of the open wall of the bar and said coupling side of the support body is coupled to said open wall of the bar, with the resting surface resting against said outer surface of the open wall of the bar and the through hole aligned with the through opening, said support part is fitted with said fitting area of the coupling side such that when the support body is translated in the longitudinal direction of the bar in either of the two ways of said longitudinal direction, said support body integrally drives the composite nut.

As will be seen below in the detailed description of the embodiments of the invention, this configuration considerably facilitates the task of placing the support body in a desired position along the bar. The user first places the composite nut in the bar, sinks the central portion which elastically deforms so that the rigid nut enters the rail and stays below the flanges, and finally rotates the rigid nut 90°, whereby said rigid nut is trapped under the flanges. The composite nut is then kept in place as a result of the elastic return force of the deformed central portion, which pushes the rigid nut against the flanges. Given that this elastic force is not high, the user can move the composite nut along the bar by pushing it with his or her hand. Up to this point, the operation is the same as for the prior art mentioned above. The difference is that as a result of the support body fitting through the fitting area with the support part of the composite nut, the user can place the support body against the bar, in the position suited for performing the fitting with the support part of the composite nut or nuts intended for fixing the support, which is the same as the final position of the support body with respect to said composite nuts, and then use the support body, moving it in a translational movement along the bar, to thus drive the composite nuts along the bar to the desired position, and this without having to use the fixing rods. Once placed in the desired position, by means of a simple translation of the support body, the assembly formed by the support body and the composite nut or nuts, all that is left is to place each fixing rod for fixing the support body to each composite nut and at the same time fixing the final position of the support body with respect to the bar. Preferably, the fixing rod is a screw and the hole of the rigid nut is a threaded hole, although other solutions such as, for example, a bayonet-type closure, are possible.

Various complementary shapes of the support part and the fitting area are possible for performing the fitting, which allows the support body to drive the composite nut in the longitudinal direction of the bar without the need to use fixing rods. For example, and in a non-limiting manner, the support part and the fitting area can be expected to have complementary projections and recesses, the fitting area can be expected to have a portion entering the through opening of the central portion of the support part, or the fitting area can be expected to enclose the support part.

The fitting area preferably has a shape complementary to the shape of the frame, such that in the assembled position of the support assembly, said frame is fitted with said fitting area. This configuration allows the fitting to be performed without interfering in the central portion of the support part, and therefore without interfering in the elastic deformation of said central portion or in the placement of the fixing rod.

In preferred embodiments, the fitting area of the coupling side of the support body comprises at least one housing sized for housing the frame of the support part such that, in said assembled position of the support assembly, said frame is fitted entirely within said housing. This configuration makes it particularly easy for the user to position the support body to perform the fitting.

The fitting area of the coupling side of the support body preferably comprises at least two protrusions protruding with respect to the resting surface and which, in the assembled position of the support assembly, enclose the frame in the longitudinal direction of said bar and enter the continuous opening. This configuration also contributes to facilitating the positioning of the support body by the user, and it furthermore causes the fitting to be more robust during the movement of the support body along the bar.

In preferred embodiments, the frame comprises protuberances formed on a lower face of the frame, whereby said frame rests on the outer surface of the open wall of the bar when the support assembly is in the assembled position. These protuberances keep the frame slightly separated from the outer surface of the open wall of the bar, which facilitates the positioning of the support body and the fitting thereof with the frame. Furthermore, these protuberances reduce the contact surface between the frame and the outer surface of the open wall of the bar, whereby they reduce the friction force and thereby facilitate the movement of the support body together with the composite nut in the longitudinal direction of the bar. These protuberances are preferably formed and sized for being crushed by the force exerted by the support body on the frame resting against the outer surface of the open wall of the bar when the fixing of the support body to the bar is performed by means of the rod or the fixing screw. The protuberances thus crushed do not disturb the position of the support body with respect to the bar in the final position.

The protuberances are preferably arranged in opposite positions on both sides of the central portion of the support part. Better sliding of the composite nut along the bar when driven by the support body is thereby achieved.

The protuberances are preferably two aligned ribs arranged on both sides of said central portion. This configuration is sufficient for keeping the frame slightly separated from the bar and minimizes the amount of material needed for forming the frame. It further minimizes the friction surface between the frame and the bar.

The protuberances preferably have a pointed sharp edge section shape. This shape even further reduces the friction surface between the frame and the bar. Furthermore, it facilitates the crushing of the protuberances by the force exerted by the support body on the frame resting against the outer surface of the open wall of the bar when the fixing of the support body to the bar is performed by means of the rod or the fixing screw.

In preferred embodiments, the assembly comprises at least two of the composite nuts and the coupling side of the support body comprises at least two of the fitting areas separate from one another and aligned in the longitudinal direction of the bar. In these embodiments, the effect of the invention described above is particularly important. In fact, with two or more composite nuts for each support body, in the prior art it is particularly burdensome to properly place the composite nuts along the bar in the desired final position for the support body.

In preferred embodiments, the support body comprises a base in which the coupling side is formed and an arm extending in cantilever form from said base and forming on an upper face a flat seating surface, orthogonal to the longitudinal direction of the bar in the assembled position of the support assembly, for supporting a cable tray seated on said flat seating surface. The support body can be, in particular, a bracket or a second bar which is fixed to the bar perpendicularly. In these embodiments, the effect of the invention described above is also particularly important. In fact, the bar is placed in the vertical position, whereby it is easier to lose the position of the composite nuts along the bar during installation.

In the preferred embodiments, the bar is a one-piece profile made of polymer material. The support body is preferably a single molded part made of polymer material. The support part of the composite nut is preferably a single molded part made of polymer material. The polymer material can be the same or different for each of these parts. The polymer material is preferably an electrically insulating material, such as PVC (polyvinyl chloride), for example, with a surface resistivity exceeding 100 MΩ (surface resistivity measured according to the EN 62631-3-2:2016 standard).

The invention also relates to a composite nut suitable for forming an assembly as described above, comprising:
- a rigid nut comprising a hole for receiving a fixing rod and having a width, in a plane perpendicular to the axis of said hole, that is smaller in a first direction than in a second direction perpendicular to said first direction,
- and a support part supporting said rigid nut and comprising a frame and a central portion which is attached to said frame and in which said rigid nut is housed, said central portion comprising a through opening aligned with said hole of the rigid nut for the passage of the fixing rod; and said support part being formed such that when being subjected to a pushing force, it undergoes an elastic deformation which moves said rigid nut away from said frame;
characterized in that said frame comprises protuberances formed on a lower face of said frame, suitable for being the face whereby said frame rests on the outer surface of the open wall of the bar when said support assembly is in the assembled position.

The protuberances are preferably arranged in opposite positions on both sides of said central portion.

The protuberances are preferably two aligned ribs arranged on both sides of said central portion.

The protuberances preferably have a pointed sharp edge section shape.

The support part is preferably a single molded part made of polymer material.

The invention also comprises other detail features shown in the following detailed description of an embodiment of the invention and in the attached figures.

### Brief Description of the Drawings

The advantages and features of the invention are apparent from the following description in which a preferred embodiment of the invention is described in a non-limiting manner with respect to the scope of the main claim in reference to the figures.
Figure 1 is an exploded perspective view of a support assembly for cable trays according to the invention.
Figures 2, 3, and 4 are, respectively, a rear perspective view, a top view, and a partial perspective view of the support body.
Figures 5, 6, 7, and 8 are, respectively, a front perspective view, a rear view, a first rear perspective view, and a second rear perspective view of the composite nut.
Figure 9 is a rear perspective view of the support part of the composite nut, without the rigid nut.
Figure 10 is an enlarged partial perspective view of the composite nut, showing an area of the frame with the protuberance.
Figures 11, 12, and 13 are, respectively, a front perspective view, a rear perspective view, and a top view of the bar.
Figures 14, 15, 16, and 17 are perspective views of the assembly showing successive assembly steps for the assembly.
Figures 18 and 19 are a side view and a side perspective view showing the composite nut placed in the bar, with the frame resting through the protuberances on the outer surface of the open wall of the bar.
Figure 20 is a partial rear view of the support body and the composite nut in a position corresponding to the assembled position of the support assembly. The bar has not been drawn for the purpose of showing the position of the composite nut with respect to the support body.
Figure 21 is a sectioned partial perspective view of the support assembly in the assembled position, showing the position of the frame with respect to the support body and the bar.

### Detailed Description of an Embodiment of the Invention

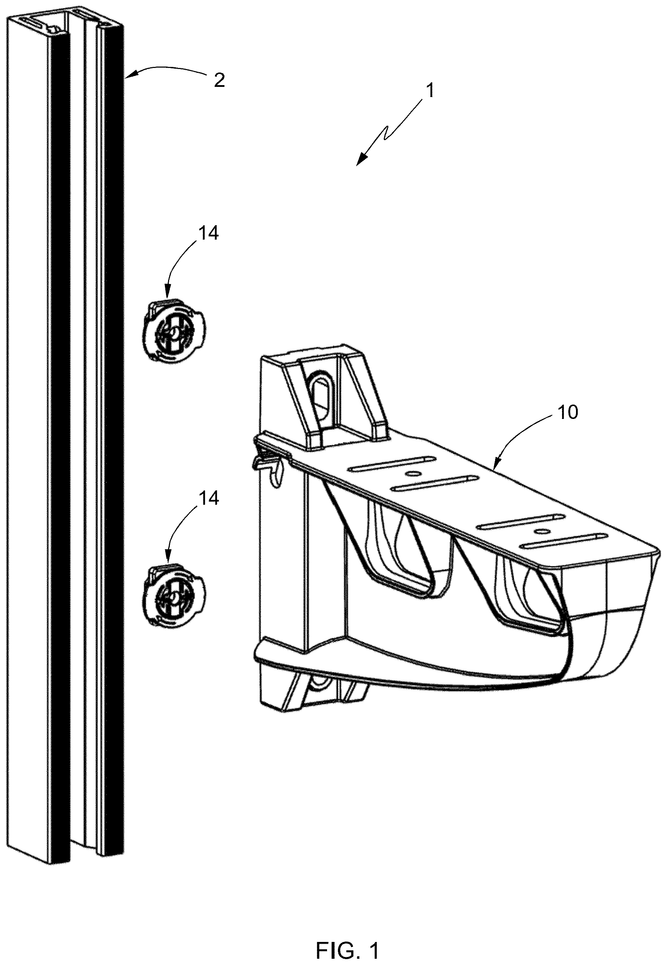

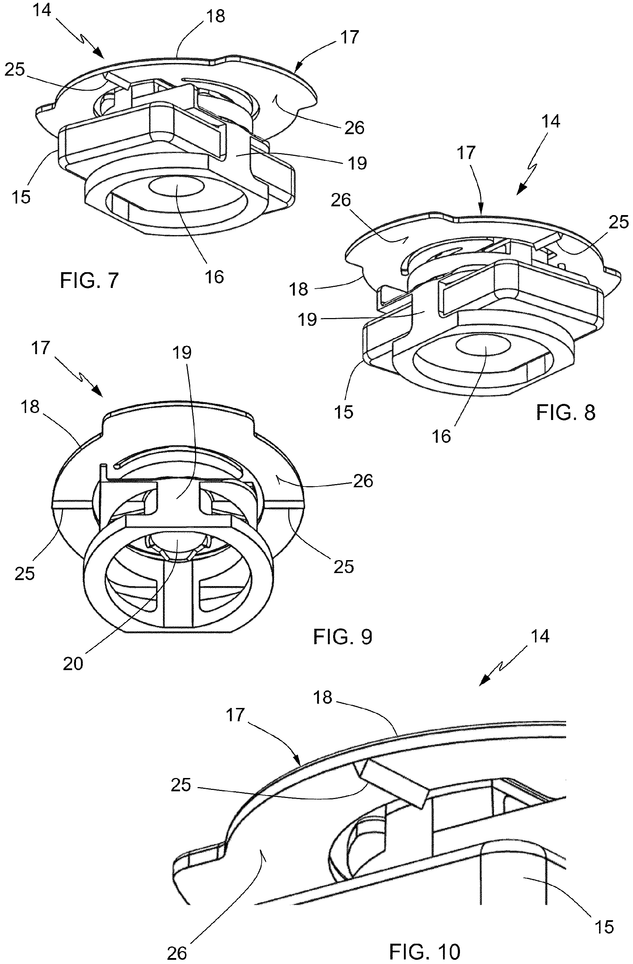

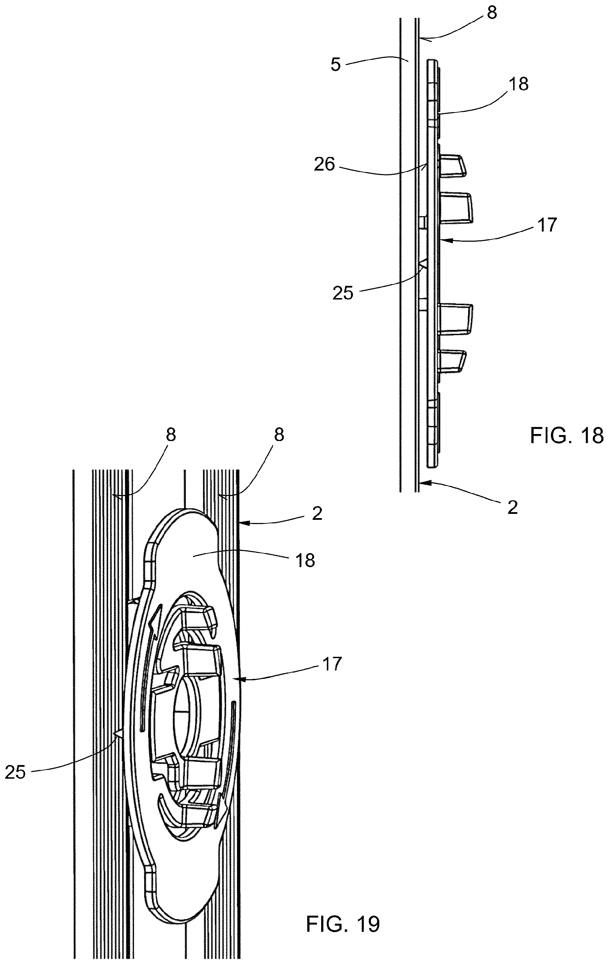

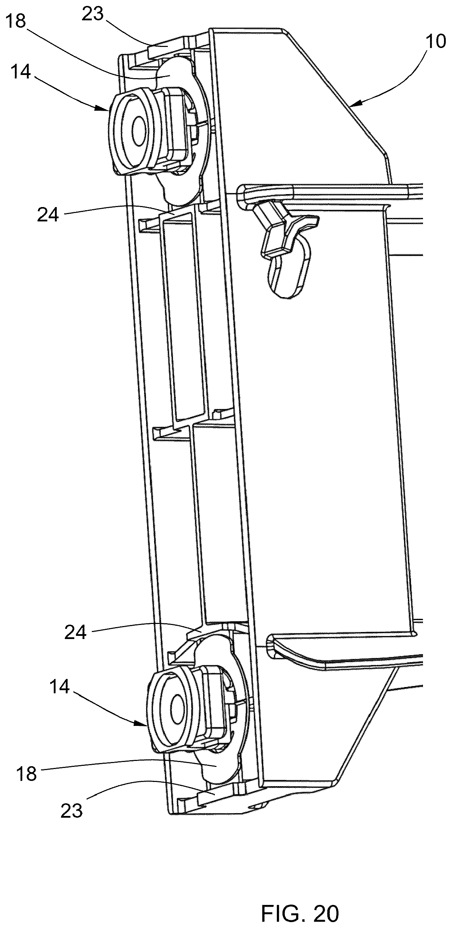

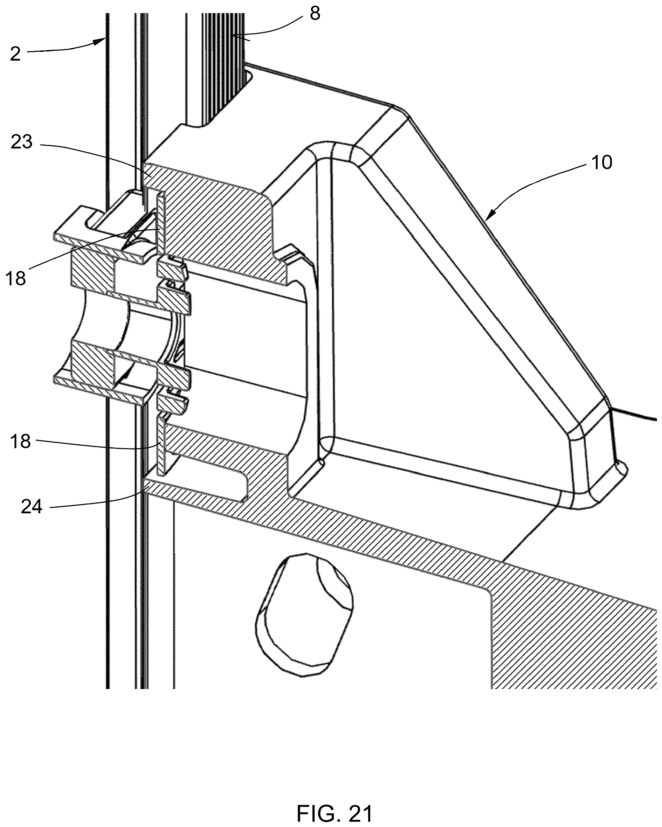

Figures 1 to 21 show an embodiment of the support assembly according to the invention. In this example, the support body is a bracket intended for supporting a cable tray, and the bar is placed in the vertical direction. However, other configurations of the support body according to the invention are possible. For example and in a non-limiting manner, the support body can be a second bar with a coupling base at its end, or different types of attachment elements for attaching two bars with different angles. The bar can have a geometry different from the one shown in the figures, and it can preferably be a bar made of polymer material, as in this example, or a metallic bar. The composite nut described in this example is identical to the composite nut in document ES1260154U, except for the presence of the protuberances on the lower face of the frame and the dimension of the frame in the longitudinal direction of the bar that has been modified for said frame to fit inside a housing of the support body. Although this composite nut design is the preferred design, many other designs with different shapes of the frame and with different configurations of the central portion are possible for providing the elastic deformation which allows the rigid nut to sink.

The support assembly 1 shown in Figure 1 is formed by a bar 2, a support body 10, which is a bracket in this example, and two identical composite nuts 14.

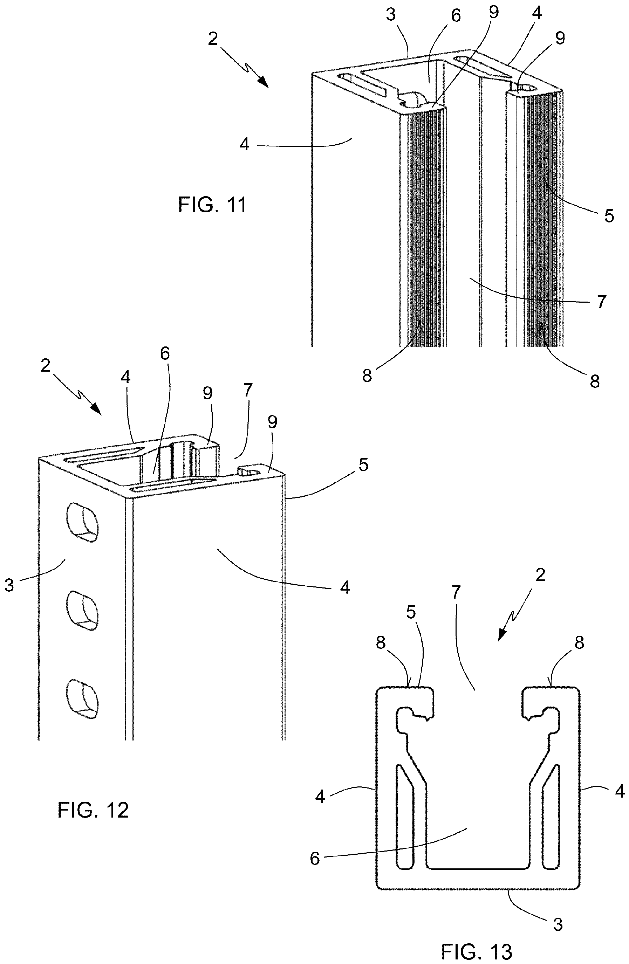

As can be seen in Figures 11 to 13, the bar 2 is a hollow profile in the form of a rail, comprising a base wall 3, two side walls 4 facing one another, and an open wall 5 facing the base wall 3. These walls 3, 4, and 5 demarcate with one another an empty inner space 6 of the bar 2 which is intended for housing the rigid nut 15. The open wall 5 has a continuous opening 7 extending all along the length of the bar 2, such that the free ends of the side walls 4 form an outer surface 8 of the open wall 5 in one and the same plane on both sides of said continuous opening 7. The side walls 4 form two facing flanges 9 which form a retention for the rigid nut 15 when it is housed in the empty space 6. The bar 2 is an extruded profile made of polymer material such as, for example, a thermoplastic such as PVC.

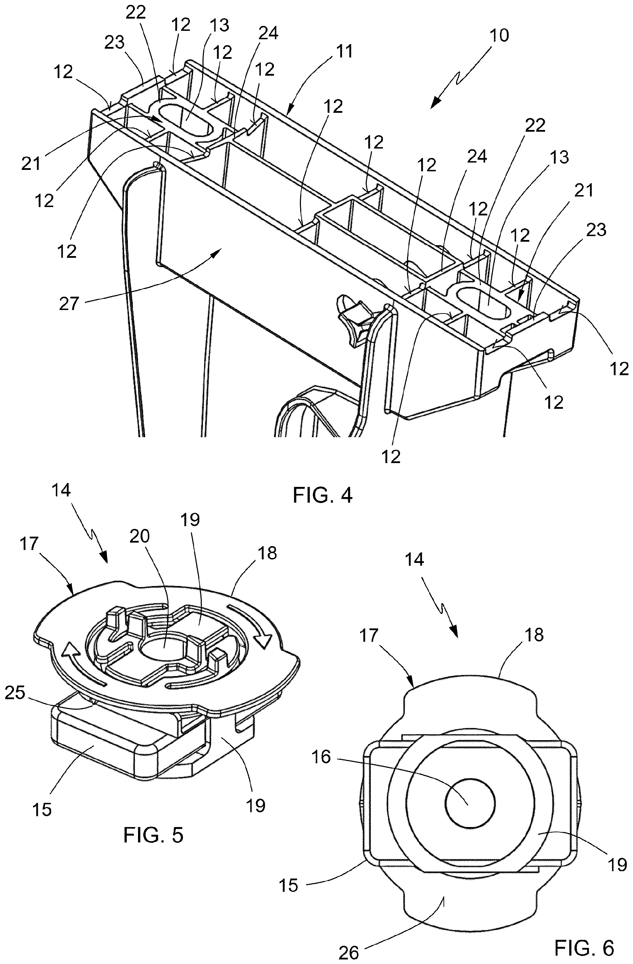

The composite nut 14 is depicted in Figures 5 to 10. It is formed by a rigid nut 15 and a support part 17 supporting said rigid nut 15. The rigid nut 15 is a metallic part with rectangular parallelepiped shape and has a threaded hole 16 (the threading is not depicted in the figures) for receiving a fixing rod (not presented in the figures) used for fixing the support body 10 to the bar 2. In this case, the fixing rod is a fixing screw which is threaded into the hole 16. As can be seen in Figure 6, the rigid nut 15 has a width, in a plane perpendicular to the axis of the hole 16, that is smaller in a first direction than in a second direction perpendicular to said first direction. The dimensions of the rigid nut 15 are such that when it is arranged with the first direction orthogonal to the longitudinal direction of the bar 2, it can pass through the continuous opening 7 for being housed in the empty inner space 6 below the flanges 9, and when it is arranged with the second direction orthogonal to the longitudinal direction of the bar 2, it is housed in the empty inner space 6 below the flanges 9 and interferes with the latter such that it cannot pass through the continuous opening 7. The support part 17 comprises a frame 18 and a central portion 19 which is attached to said frame 18 and in which the rigid nut 15 is housed. This central portion 19 comprises a through opening 20 aligned with the hole 16 of the rigid nut 15 for the passage of the fixing rod. The support part 17 is formed such that when being subjected to a pushing force, it undergoes an elastic deformation which moves the rigid nut 15 away from the frame 18. The support part 17 is a single molded part made of polymer material such as, for example, PVC.

As mentioned above, the composite nut 14 described in this example is identical to the composite nut in document ES1260154U, except that the frame 18 comprises protuberances 25 formed on a lower face 26 of the frame 18, whereby said frame 18 rests on the outer surface 8 of the open wall 5 of the bar 2 when the support assembly 1 is in the assembled position, and the dimension of the frame 18 in the longitudinal direction of the bar 2 has been modified for said frame 18 to fit in a housing 22 of the support body 10. In the depicted embodiment, the protuberances 25 are two aligned ribs which are arranged on both sides of the central portion 19 and have a pointed sharp edge section shape. In the depicted embodiment, the ribs have a triangular section shape. Besides the effect of these protuberances 25, which consists of slightly separating the lower face 26 of the frame 18 from the outer surface 8 of the open wall 5 of the bar 2, the operation of the composite nut 14 and the method for coupling same to the bar 2 are identical to those described in the mentioned document ES1260154U.

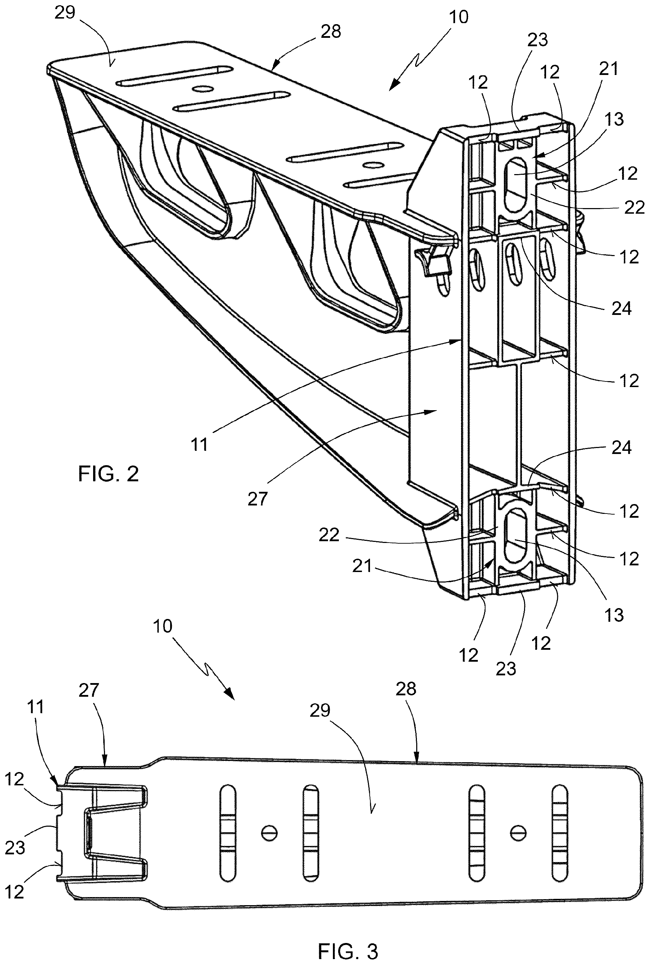

As shown in Figures 2 to 4, the support body 10 is a bracket comprising a base 27 and an arm 28 extending in cantilever form from said base 27 and forming on an upper face a flat seating surface 29, orthogonal to the longitudinal direction of the bar 2 in the assembled position of the support assembly 1, for supporting a cable tray seated on said flat seating surface 29. A coupling side 11 is formed at the base 27 for coupling the support body 10 to the open wall 5 of the bar 2. The coupling side 11 comprises a resting surface 12 resting against the outer surface 8 of the open wall 5 of the bar 2 and two through holes 13. This resting surface 12 is a discontinuous surface, formed by the coplanar edges of internal ribbing of the base 27. Each of the through holes 13 is intended for the passage of a fixing rod, which is a fixing screw in this example which is threaded into the threaded hole 16 of each of the two composite nuts 14, for fixing the support body 10 to the bar 2. The support body 10 is a single molded part made of polymer material such as, for example, PVC.

The coupling side 11 of the support body 10 comprises two fitting areas 21, one for each composite nut 14, separate from one another and aligned in the direction corresponding to the longitudinal direction of the bar 2 when the support body 1 is in the assembled position. Each fitting area 21 has a shape complementary to the shape of the frame 18 of the support part 17 of each composite nut 14. Furthermore, each fitting area 21 comprises a housing 22 sized for housing the frame 18 of the support part 17, and two protrusions 23, 24 protruding with respect to the resting surface 12 and arranged on both sides of the housing 22 in the longitudinal direction of the bar 21. In the depicted example, a first protrusion 23 is a tab formed at each end of the base 27, and a second protrusion 24 is a prolongation of an internal ribbing of the base 27.

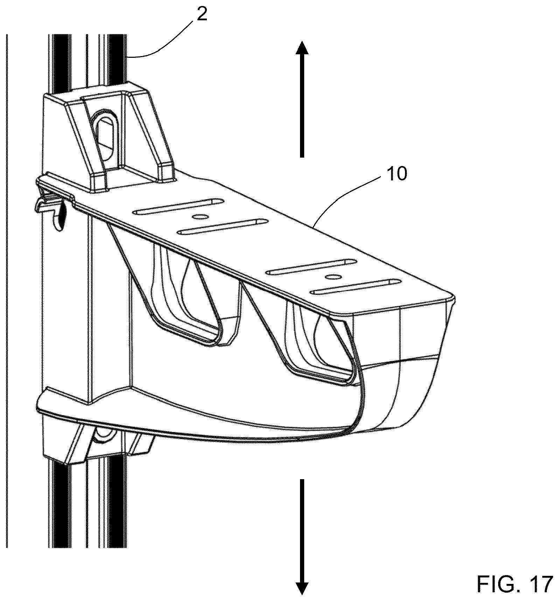

In the assembled position of the support assembly 1, each rigid nut 15 is arranged with the second direction, i.e., the direction of greatest width, orthogonal to the longitudinal direction of the bar 2 and is housed in the empty inner space 6 below the flanges 9, the frame 18 is resting on the outer surface 8 of the open wall 5 of the bar 2, and the coupling side 11 of the support body 10 is coupled to the open wall 5, with the resting surface 12 resting against the outer surface 8 and the through hole 13 aligned with the through opening 20. This assembled position of the support assembly 1 is shown in Figures 17, 20, and 21.

In this assembled position of the support assembly 1, the frame 18 of each composite nut 14 is fitted with the corresponding fitting area 21 and is fitted entirely within the housing 22, and the two protrusions 23, 24 enclose said frame 18 in the longitudinal direction of the bar 2 and enter the continuous opening 7 of the open wall 5. Therefore, when the support body 10 is translated in the longitudinal direction of the bar 2 in either of the two ways of said longitudinal direction, said support body 10 integrally drives the two composite nuts 14. These two ways of the longitudinal direction are indicated with arrows in Figure 17.

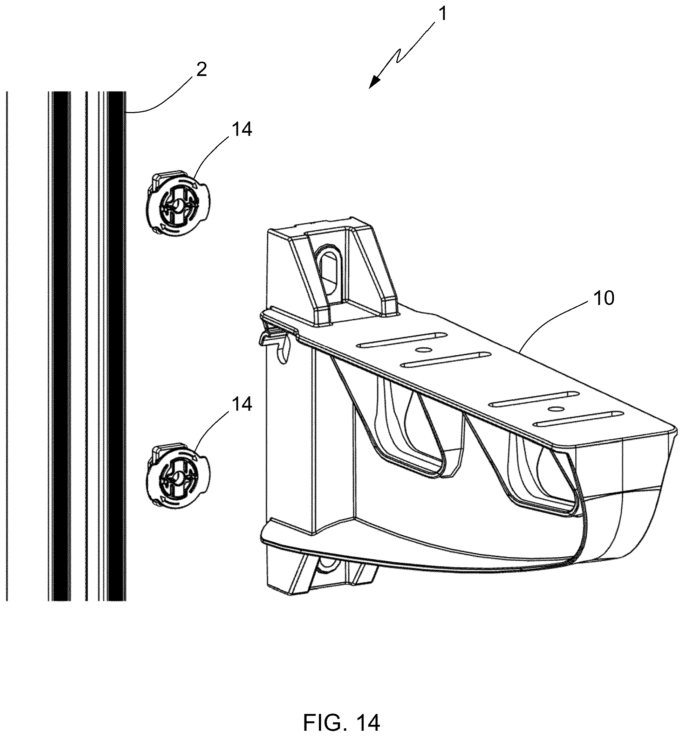

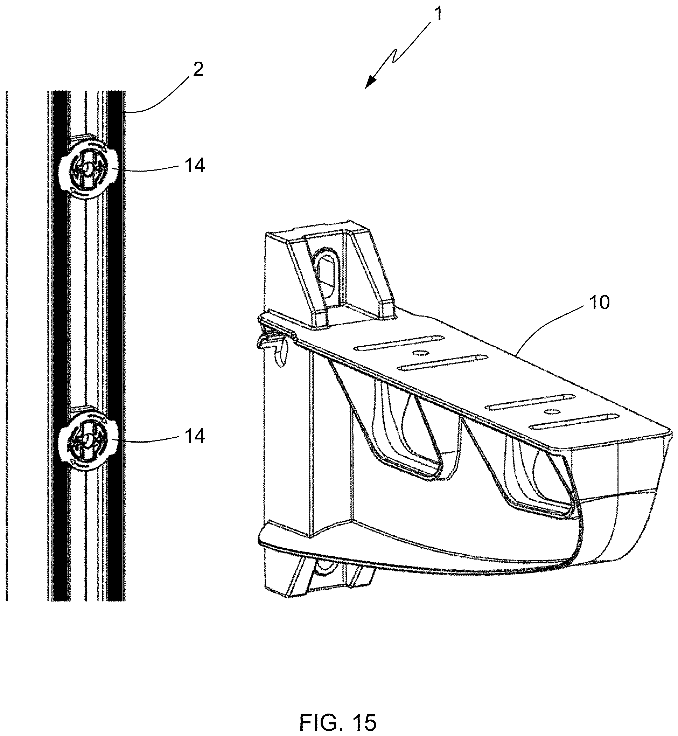

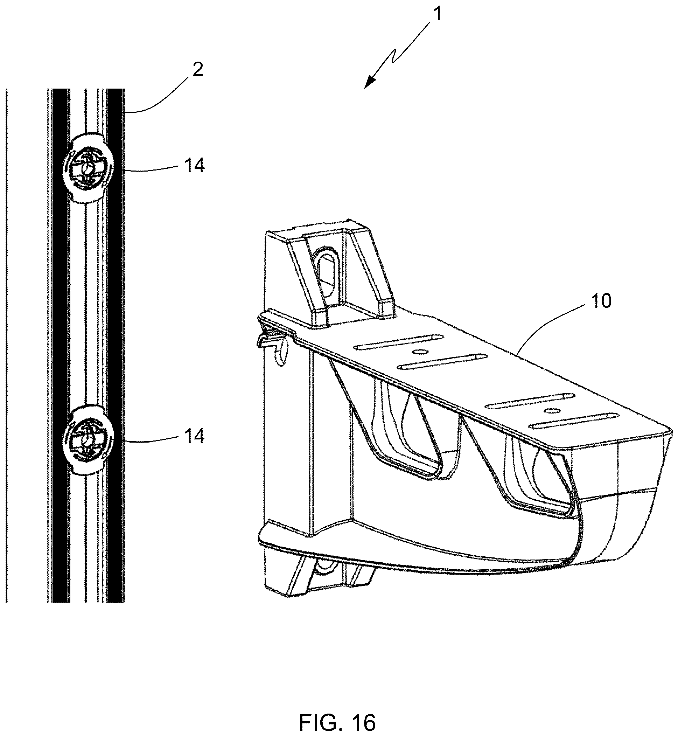

The method for fixing the support body 10 to the bar 2 in a desired position along said bar 2 is the following. First, each composite nut 14 is positioned as shown in Figure 14, with the rigid nut 15 facing the continuous opening 7 and such that the direction of greatest width of said rigid nut 15 is the longitudinal direction of the bar 2. Each composite nut 14 is placed in the bar 2, passing the rigid nut 15 through the continuous opening 7. In this position, shown in Figure 15, the frame 18 rests on the outer surface 8 of the open wall 5. Then, a finger is used to push the central portion 19 of the support part 17 to elastically deform it and sink the rigid nut 15 into the empty inner space 6 below the flanges 9, and the composite nut 14 is turned 90°. The assembly thus reaches the position shown in Figures 16, 18, and 19, in which the rigid nut 15 is caught in the empty inner space 6 and rests on the flanges 9 due to the effect of the return force of the elastic deformation of the central portion 19, and the lower face 26 of the frame 18 rests on its protuberances 15 on the outer surface 8 of the open wall 5 of the bar 2. In this position, the composite nuts 14 are coupled to the bar 2 and can be translated in the longitudinal direction of the bar. Next, the support body 10 is placed on the bar 2 such that the frame 18 of each composite nut 14 is fitted with the corresponding fitting area 21 and is fitted entirely within the housing 22, and the two protrusions 23, 24 enclose said frame 18 and enter the continuous opening 7 of the open wall 5. This is the assembled position of the support assembly 1. From this position, the support body 10 can be translated along the longitudinal direction of the bar 2, in the two ways, to the desired position of the support body. This translation of the support body 10 drives the composite nuts 14, which remain fitted in the corresponding fitting areas 21. The translation is performed by hand without any difficulty since, as a result of the protuberances 25, friction between the frame 18 and the outer surface 8 of the open wall 5 is low. To conclude, one fixing screw for each through hole 13 is introduced and threaded into the threaded hole 16. The head of the fixing screw rests on the support body 10. When the fixing screws are screwed in with force, the protuberances 25 are crushed against the outer surface 8 of the open wall.

## Claims

1. A support assembly (1) for cable trays, comprising:
- a bar (2) formed by a hollow profile in the form of a rail, comprising a base wall (3), two side walls (4) facing one another, and an open wall (5) which demarcate with one another an empty inner space (6) of said bar (2), said open wall (5) facing said base wall (3) and comprising a continuous opening (7) extending all along the length of said bar (2), such that the free ends of said side walls (4) form an outer surface (8) of said open wall (5) in one and the same plane on both sides of said continuous opening (7), and said side walls (4) form two facing flanges (9);
- a support body (10) comprising a coupling side (11) for coupling said support body (10) to said open wall (5) of the bar (2), said coupling side (11) comprising a resting surface (12) resting against said outer surface (8) of the open wall (5) of the bar (2) and at least one through hole (13) for the passage of a fixing rod for fixing said support body (10) to said bar (2);
- and at least one composite nut (14) which is coupled to said bar (2), for the detachable fixing of said support body (10) to said bar (2) by means of the fixing rod, said composite nut (14) comprising:
- a rigid nut (15) comprising a hole (16) for receiving the fixing rod and having a width, in a plane perpendicular to the axis of said hole (16), that is smaller in a first direction than in a second direction perpendicular to said first direction, said rigid nut (15) being sized such that when it is arranged with the first direction orthogonal to the longitudinal direction of said bar (2), it can pass through said continuous opening (7) for being housed in said empty inner space (6) below said flanges (9), and when it is arranged with the second direction orthogonal to the longitudinal direction of said bar (2), it is housed in said empty inner space (6) below said flanges (9) and interferes with said flanges (9) such that it cannot pass through said continuous opening (7);
- and a support part (17) supporting said rigid nut (15) and comprising a frame (18) and a central portion (19) which is attached to said frame (18) and in which said rigid nut (15) is housed, said central portion (19) comprising a through opening (20) aligned with said hole (16) of the rigid nut (15) for the passage of the fixing rod; and said support part (17) being formed such that when being subjected to a pushing force, it undergoes an elastic deformation which moves said rigid nut (15) away from said frame (18);
**characterized in that** said coupling side (11) of the support body (10) comprises at least one fitting area (21) having a shape complementary to the shape of said support part (17), such that in an assembled position of said support assembly (1), in which said rigid nut (15) is arranged with the second direction orthogonal to the longitudinal direction of said bar (2) and is housed in said empty inner space (6) below said flanges (9), said frame (18) is resting on said outer surface (8) of the open wall (5) of the bar (2), and said coupling side (11) of the support body (10) is coupled to said open wall (5) of the bar (2), with said resting surface (12) resting against said outer surface (8) of the open wall (5) of the bar (2) and said through hole (13) aligned with said through opening (20), said support part (17) is fitted with said fitting area (21) of the coupling side (11) such that when said support body (10) is translated in the longitudinal direction of said bar (2) in either of the two ways of said longitudinal direction, said support body (10) integrally drives said composite nut (14).

2. The support assembly (1) according to claim 1, **characterized in that** said fitting area (21) has a shape complementary to the shape of said frame (18), such that in said assembled position of the support assembly (1), said frame (18) is fitted with said fitting area (21).

3. The support assembly (1) according to claim 2, **characterized in that** said fitting area (21) of the coupling side (11) of the support body (10) comprises at least one housing (22) sized for housing said frame (18) of the support part (17) such that, in said assembled position of the support assembly (1), said frame (18) is fitted entirely within said housing (22).

4. The support assembly (1) according to any one of claims 1 to 3, **characterized in that** said fitting area (21) of the coupling side (11) of the support body (10) comprises at least two protrusions (23, 24) protruding with respect to said resting surface (12) and which, in said assembled position of the support assembly (1), enclose said frame (18) in the longitudinal direction of said bar (2) and enter said continuous opening (7).

5. The support assembly (1) according to any one of claims 1 to 4, **characterized in that** said frame (18) comprises protuberances (25) formed on a lower face (26) of said frame (18) whereby said frame (18) rests on said outer surface (8) of the open wall (5) of the bar (2) when said support assembly (1) is in said assembled position.

6. The support assembly (1) according to claim 5, **characterized in that** said protuberances (25) are arranged in opposite positions on both sides of said central portion (19).

7. The support assembly (1) according to claim 6, **characterized in that** said protuberances (25) are two aligned ribs arranged on both sides of said central portion (19).

8. The support assembly (1) according to any one of claims 5 to 7, **characterized in that** said protuberances (25) have a pointed sharp edge section shape.

9. The support assembly (1) according to any one of claims 1 to 8, **characterized in that** it comprises at least two of said composite nuts (14) and said coupling side (11) of the support body (10) comprises at least two of said fitting areas (21) separated from one another and aligned in the longitudinal direction of said bar (2).

10. The support assembly (1) according to claim 9, **characterized in that** said support body comprises a base (27) in which said coupling side (11) is formed and an arm (28) extending in cantilever form from said base (27) and forming on an upper face a flat seating surface (29), orthogonal to the longitudinal direction of said bar (2) in said assembled position of the support assembly (1), for supporting a cable tray seated on said flat seating surface (29).

11. The support assembly (1) according to any one of claims 1 to 10, **characterized in that** said bar (2) is a one-piece profile made of polymer material, said support body (10) is a single molded part made of polymer material, and said support part (17) of the composite nut (14) is a single molded part made of polymer material.

12. A composite nut (14) suitable for forming an assembly according to claim 1, comprising:
- a rigid nut (15) comprising a hole (16) for receiving a fixing rod and having a width, in a plane perpendicular to the axis of said hole (16), that is smaller in a first direction than in a second direction perpendicular to said first direction,
- and a support part (17) supporting said rigid nut (15) and comprising a frame (18) and a central portion (19) which is attached to said frame (18) and in which said rigid nut (15) is housed, said central portion (19) comprising a through opening (20) aligned with said hole (16) of the rigid nut (15) for the passage of the fixing rod; and said support part (17) being formed such that when being subjected to a pushing force, it undergoes an elastic deformation which moves said rigid nut (15) away from said frame (18);
**characterized in that** said frame (18) comprises protuberances (25) formed on a lower face (26) of said frame (18), suitable for being the face whereby said frame (18) rests on the outer surface (8) of the open wall (5) of the bar (2) when said support assembly (1) is in the assembled position.

13. The composite nut (14) according to claim 12, **characterized in that** said protuberances (25) are arranged in opposite positions on both sides of said central portion (19).

14. The composite nut (14) according to claim 13, **characterized in that** said protuberances (25) are two aligned ribs arranged on both sides of said central portion (19).

15. The composite nut (14) according to any one of claims 12 to 14, **characterized in that** said protuberances (25) have a pointed sharp edge section shape.

16. The composite nut (14) according to any one of claims 12 to 15, **characterized in that** said support part (17) is a single molded part made of polymer material.
